# EUROPEAN PATENT APPLICATION

(11) **EP 4 585 346 A1**
(43) Date of publication of application: **16.07.2025**
(21) Application number: 24220369.3
(22) Date of filing: 16.12.2024
(51) Int. Cl.: B23K 9/18, B23K 9/095, B23K 9/10

(54) **WELDING POWER SUPPLY**

(30) Priority: 12.01.2024 JP 2024003015
(71) Applicant: DAIHEN Corporation, Yodogawa-ku Osaka-shi Osaka 532-8512 (JP)
(72) Inventor: Tanaka, Kazuhiro, Osaka 532-8512 (JP); Onishi, Takanori, Osaka 532-8512 (JP); Doi, Toshimitsu, Osaka 532-8512 (JP)
(74) Representative: Boult Wade Tennant LLP

(57) **Abstract**

A welding system includes a plurality of welding power supplies connected in parallel, and the polarity switching is performed by the respective welding power supplies. When the output current of a welding power supply is below a threshold, the welding power supply sends out a permission signal and proceeds to switch the polarity. Another welding power supply whose output current is not below the threshold performs its polarity switching upon receiving the permission signal.

## Description

### FIELD

The present disclosure relates to polarity switching of a welding power supply.

### BACKGROUND

A plurality of welding power supplies may be connected in parallel to increase the output capacity. When a plurality of welding power supplies are operated in parallel, if the polarity switching timings of the welding power supplies are not synchronized, a cross current flows from a welding power supply that has switched the polarity earlier to a welding power supply that has not yet switched the polarity. JP-A-2021-053695 discloses transmitting a synchronization signal that indicates the polarity switching timings of a plurality of welding power supplies by high-speed communication to prevent such a cross current.

### SUMMARY

JP-A-2019-221010 discloses a welding power supply that converts DC power into high-frequency power by an inverter circuit, then converts the high-frequency power into a desired voltage by a transformer, and then rectifies it to produce DC power. In this device, switching elements connected in series to the DC power output, which is obtained by rectification, produces a bipolar welding current. In JP-A-2019-221010, to prevent excessive induced voltage, generated by an external inductance, from being applied to the switching elements, the polarity switching is performed as follows: both switching elements connected in series are first turned on, and after the current flowing in the external inductance is reduced to a predetermined value, one of the switching elements is turned off to switch the polarity. Meanwhile, JP-A-2021-053695 discloses transmitting a synchronization signal by high-speed communication to synchronize the polarity switching timings of a plurality of AC power sources connected in parallel. In the welding power supply described in JP-A-2019-221010, however, polarity switching of each welding power supply is performed when the current flowing in the welding power supply has fallen to or below a predetermined value. Therefore, the polarity switching timings cannot be synchronized due to variations in the external inductance of the welding power supplies, and there is an issue that a cross current may flow from a welding power supply that has switched the polarity earlier to a welding power supply that has not yet switched the polarity.

In light of the above circumstances, an object of the present disclosure is to provide a welding power supply capable of synchronizing the polarity switching timings of a plurality of welding power supplies connected in parallel.

To solve the above issue, the invention according to a first aspect provides a welding system comprising: a plurality of welding power supplies connected in parallel, each of the welding power supplies comprising:
an inverter circuit that convers DC power into high-frequency power;
a transformer that applies the high-frequency power generated by the inverter circuit to a primary winding to convert the high-frequency power to a predetermined voltage;
a rectifying circuit that converts a high-frequency power generated at a secondary winding of the transformer into a DC power;
a polarity switching circuit that converts output of the rectifying circuit into a bipolar welding current by switching elements connected in series;
a current detector that detects the welding current;
a control circuit that drives the inverter circuit and the polarity switching circuit;
a communication line that receives a synchronization signal indicating polarity switching timing from a control unit by high-speed communication; and
a second communication line that transmits a permission signal, the permission signal being generated by the control circuit when an absolute value of output of the current detector falls to or below a predetermined value during a polarity switching period, the polarity switching period being a period in which the control circuit stops the inverter circuit and keeps both of the switching elements of the polarity switching circuit that are connected in series in an on state,
wherein the control circuit turns off one of the switching elements and starts the inverter circuit to perform polarity switching when the absolute value of the output of the current detector falls to or below the predetermined value or when the permission signal is received through the second communication line.

The invention according to a second aspect provides:
the welding system according to the first aspect, wherein the control circuit turns off one of the switching elements and starts the inverter circuit to perform polarity switching when the absolute value of the output of the current detector falls to or below the predetermined value and the permission signal is received from all of the welding power supplies connected in parallel other than the welding power supply of the control unit through the second communication line.

The invention according to a third aspect provides:
the welding system according to the second aspect, wherein the control circuit turns off one of the switching elements and starts the inverter circuit to perform polarity switching when a predetermined period of time has elapsed from the synchronization signal.

The invention according to a fourth aspect provides:
the welding system according to the third aspect, wherein the control circuit issues a warning using an alarm in a case where the control circuit turns off one of the switching elements and starts the inverter circuit to perform polarity switching when a predetermined period of time has elapsed from the synchronization signal.

The welding power supply according to the present disclosure makes it possible to synchronize the polarity switching timings of a plurality of welding power supplies in a welding system in which the welding power supplies are connected in parallel.

### DRAWINGS

Fig. 1 shows a welding system according to Embodiment 1 of the present disclosure.
Fig. 2 is a block diagram showing functions of a welding power supply according to Embodiment 1 of the present disclosure.
Fig. 3 is a view showing a welding current of the welding system according to Embodiment 1 of the present disclosure.
Fig. 4 is a block diagram showing functions of each welding power supply of the welding system according to Embodiment 1 of the present disclosure, where external inductances are taken into consideration.
Fig. 5 is a timing chart showing polarity switching operations in a welding system according to Embodiment 1 of the present disclosure.
Fig. 6 is a timing chart showing polarity switching operations in a welding system according to Embodiment 2 of the present disclosure.

### EMBODIMENTS

Embodiments of the present disclosure will be described below with reference to the drawings.

### [Embodiment 1]

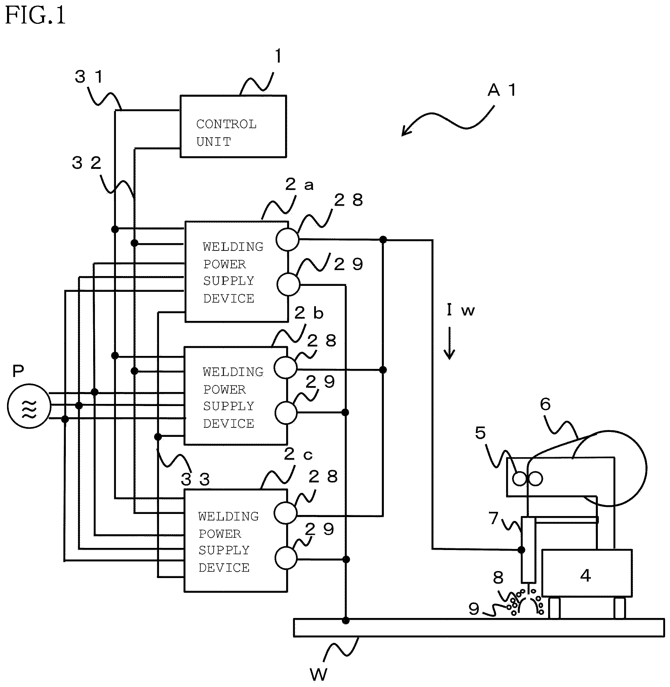

Fig. 1 shows a welding system according to Embodiment 1 of the present disclosure. The following describes the operations of the system with reference to the figure.

The welding system A1 shown in Fig. 1 performs submerged arc welding. The welding system A1 includes a control unit 1, welding power supplies 2a, 2b and 2c, communication lines 31, 32 and 33, a carriage 4, feed rolls 5, a welding wire 6, and an electrode 7. The welding system A1 feeds the welding wire 6 to the end of the electrode 7 by a wire feeder 5 while moving the carriage 4 along a welding line of a workpiece W. The welding system A1 thus creates an arc 8 between the tip of the welding wire 6 and the workpiece W, to thereby perform welding. The arc 8 is shielded from the atmosphere by flux 9. The welding power supplies 2a, 2b and 2c convert AC power from a commercial power supply P into AC power of a desired frequency and outputs the AC power to create an arc 8 between the tip of the welding wire 6 and the workpiece W. Instead of using the carriage 4, the workpiece W may be moved or turned.

The control unit 1 performs various controls of the welding system A1. The control unit 1 may be a general-purpose computer with a program for performing various controls of the welding system A1 installed in it, or may be a dedicated device for controlling the welding system A1. The control unit 1 moves the carriage 4 at a predetermined travel speed. The travel speed is determined based on the material and thickness of the workpiece W or other factors. The control unit 1 instructs the wire feeder 5 to start and stop feeding the welding wire. The control unit 1 also indicates the feeding speed of the welding wire 6. The feeding speed is determined based on the welding current or other factors.

The control unit 1 instructs the welding power supplies 2a, 2b and 2c to start and stop output. The control unit 1 also transmits a current command value for setting the output current, the number of welding power supplies connected in parallel in the welding system A1, and a synchronization signal that indicates the timing of switching the polarity of the alternating current to be output.

The communication line 31 connects the control unit 1 and the welding power supplies 2a, 2b and 2c and is wired in a bus-type wiring configuration. The control unit 1 and the welding power supplies 2a, 2b and 2c communicate with each other by, for example, fieldbus communication through the communication line 31. The control unit 1 can transmit different signals to the welding power supplies 2a, 2b and 2c. The control unit 1 transmits a signal to each of the welding power supplies 2a, 2b and 2c by dividing the use time of the communication line 31. Therefore, the communication speed on the communication line 31 decreases in accordance with the amount of information to be communicated and may be about 1.2 kbps to about 10 Mbps. In Embodiment 1, the communication speed is about 500 kbps. Through the communication line 31, the control unit 1 transmits to the welding power supplies 2a, 2b and 2c command signals to start and stop output. Further, through the communication line 31, the control unit 1 transmits to the welding power supplies 2a, 2b and 2c a current command value and the number of welding power supplies connected in parallel in the welding system A1. The communication standard used for the communication between the control unit 1 and the welding power supplies 2a, 2b and 2c through the communication line 31 is not limited to fieldbus communication. Also, the wiring configuration of the communication line 31 is not limited.

The communication line 32 connects the control unit 1 and the welding power supplies 2a, 2b and 2c and is wired in a bus-type wiring configuration. The control unit 1 and the welding power supplies 2a, 2b and 2c communicate with each other through the communication line 32 in accordance with, for example, HCI (Host Control Interface) communication standard. The HCI communication standard is developed for high-speed communication between the control unit 1 and the welding power supplies 2a, 2b and 2c. The HCI communication standard reduces the amount of communication data head to less than half the amount of data head in the fieldbus communication to reduce the amount of communication data to be transmitted. The communication speed on the communication line 32 in accordance with HCI communication standard is faster than the communication speed on the communication line 31 and may be about 25 Mbps to about 100 Mbps. In Embodiment 1, the communication speed is about 500 Mbps. Through the communication line 32, the control unit 1 transmits to the welding power supplies 2a, 2b and 2c a synchronization signal to instruct them to start the polarity switching. Since the communication line 32 only transmits the synchronization signal and does not transmit or receive any other signals, the communication speed does not become so slow. The communication standard for the control unit 1 and the welding power supplies 2a, 2b and 2c to communicate through the communication line 32 is not limited to HCI communication standard and may be other communication standards that can transmit the synchronization signal with almost no delay. Also, the wiring configuration of the communication line 32 is not limited. The communication line 32 may be a dedicated line that transmits as the synchronization signal a pulse signal switching between a high level and a low level from the control unit 1 to the welding power supplies 2a, 2b and 2c. In this case as well, the communication line 32 can perform faster communication than the communication line 31 and transmit the synchronization signal with almost no delay.

In this way, the control unit 1 and the welding power supplies 2a, 2b and 2c are connected by two communication lines, i.e., the communication line 32 for high-speed communication of the synchronization signal alone and the communication line 31 for transmitting other signals.

The communication line 33 is a dedicated line for transmitting a permission signal pm, described later, as a high-level pulse signal, and connects between the welding power supplies 2a, 2b and 2c, which are connected in parallel. The permission signal Pm needs to be transmitted at a high transmission speed between the welding power supply 2a, 2b and 2c connected in parallel. Thus, the communication line 33 may preferably use a wired communication or an optical communication using optical fiber. However, the communication method is not limited.

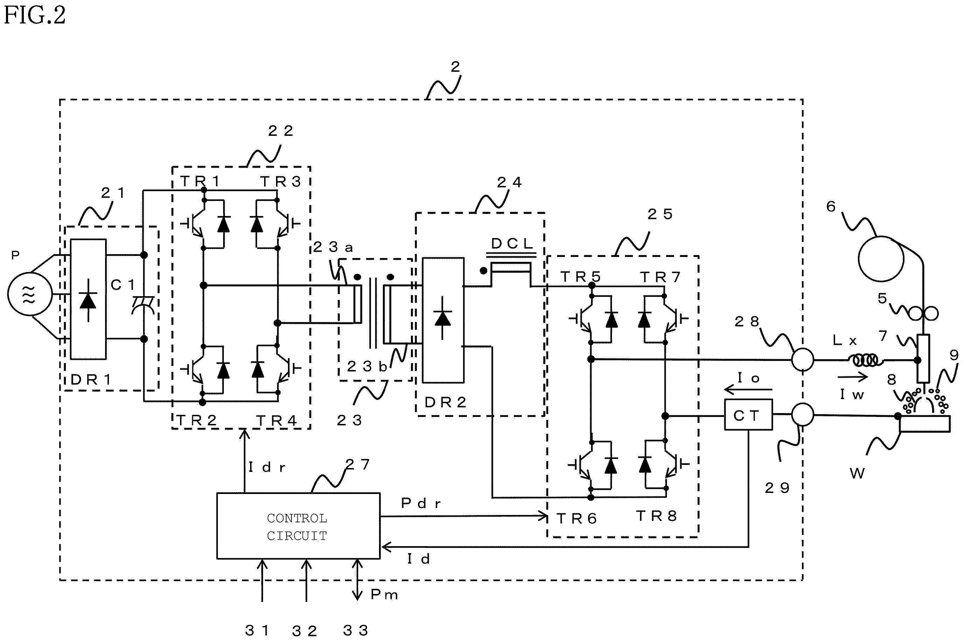

Fig. 2 is a block diagram showing functions of a welding power supply according to Embodiment 1 of the present disclosure. The following describes each block with reference to the figure.

The rectifying/smoothing circuit 21 converts the AC power inputted from the commercial power supply P into DC power and outputs the DC power. The rectifying/smoothing circuit 21 includes a rectifying circuit DR1 that rectifies the AC current and a smoothing capacitor C1 that smooths the rectified current. The configuration of the rectifying/smoothing circuit 21 is not limited.

The inverter circuit 22 is, for example, a single-phase full-bridge type PWM control inverter and includes four switching elements TR1 to TR4. The inverter circuit 22 converts the DC power inputted from the rectifying/smoothing circuit 21 into high-frequency power by switching the switching elements in accordance with the output control drive signal Idr inputted from the control circuit 27, and outputs the high-frequency power. The inverter circuit 22 may have any configuration that converts DC power into high-frequency power, and may be of a half-bridge type or may have another configuration.

The transformer 23 transforms the high-frequency voltage outputted from the inverter circuit 22 and outputs it to the rectifying circuit 24. The transformer 23 includes a primary winding 23a and a secondary winding 23b. The input terminals of the primary winding 23a are connected to the output terminals of the inverter circuit 22. The output terminals of the secondary winding 23b are connected to the input terminals of the rectifying circuit 24. The output voltage of the inverter circuit 22 is transformed in accordance with the winding turns ratio of the primary winding 23a and the secondary winding 23b and inputted to the rectifying circuit 24. Since the secondary winding 23b is insulated from the primary winding 23a, the current inputted from the commercial power supply P is prevented from flowing to the circuits on the secondary side. Since the transformer 23 transforms the high-frequency voltage outputted from the inverter circuit 22, it is made more compact and lighter as compared with transformers that transform the AC voltage of the commercial power supply P.

The rectifying circuit 24 includes a rectifying circuit DR2 and a DC reactor DCL that smooths a current. The rectifying circuit 24 converts the high-frequency power inputted from the transformer 23 into DC power for a smoothed current and outputs it to the polarity switching circuit 25. The configuration of the rectifying circuit 24 is not limited.

The polarity switching circuit 25 is, for example, a single-phase full-bridge type PWM control inverter and includes four switching elements TR5 to TR8 that constitute an H-shaped bridge circuit consisting of two pairs of arms each including two switching elements connected in series. The polarity switching circuit 25 converts the DC power inputted from the rectifying circuit 24 into AC power by switching the switching elements in accordance with the polarity switching signal Pdr inputted from the control circuit 27, and outputs the AC power. The polarity switching circuit 25 performs switching between the reversed polarity (EP) where the potential of the output terminal 28 (connected to the electrode 7) is higher than the potential of the output terminal 29 (connected to the workpiece W) and the forward polarity (EN) where the potential of the output terminal 28 is lower than the potential of the output terminal 29. The polarity switching circuit 25 may have any configuration that converts DC power into AC power, and may be of a half-bridge type or may have another configuration.

The output terminal 28 is connected to the electrode 7, and the output terminal 29 is connected to the workpiece W. The output of the welding power supply 2 creates arc 8 between the tip of the welding wire 6 and the workpiece W to melt the tip of the welding wire 6 and the workpiece W. Welding is thus performed while feeding the welding wire 6 by the wire feeder 5. The arc 8 is covered with flux 9 to be shielded from the atmosphere. An external inductance Lx due to wiring exists between the welding power supply 2 and the electrode 7 or the workpiece W.

The current detector CT detects the output current Io of the welding power supply 2. In Embodiment 1, the current detector Ct is disposed on the connection line connecting the polarity switching circuit 25 to the output terminal 29. The current detector CT inputs the current value signal Id corresponding to the detected output current Io to the control circuit 27. The configuration of the current detector CT is not limited as long as it detects the output current from the connecting line. Also, the location of the current detector CT is not limited. For example, the current detector CT may be disposed on the connecting line connecting another output terminal of the polarity switching circuit 25 and the output terminal 28.

The control circuit 27 controls the welding power supply 2 and may be implemented by a microcomputer, for example. The control circuit 27 receives the current value signal Id from the current detector CT, receives a command signal and a current command value through the communication line 31, receives a synchronization signal through the communication line 32, and receives and outputs the permission signal Pm through the communication line 33. The control circuit 27 outputs the output control drive signals Idr and the polarity switching signal Pdr, which are drive signals, to the inverter circuit 22 and the polarity switching circuit 25, respectively.

When receiving from the control unit 1 a command signal instructing to start the power output, the control circuit 27 starts outputting drive signals, i.e., the output control drive signal Idr and the polarity switching signal Pdr to the inverter circuit 22 and polarity switching circuit 25, respectively, to thereby start the power output. Also, when receiving from the control unit 1 a command signal instructing to stop the power output, the control circuit 27 stops outputting the output control drive signal Idr and the polarity switching signal Pdr, to thereby stop the power output.

Also, the control circuit 27 calculates the effective value of current based on the current value signal Id inputted from the current detector CT. Based on the effective value of current and the current command value inputted from the control unit 1, the control circuit 27 generates the output control drive signal Idr for controlling the switching elements TR1 to TR4 and outputs it to the inverter circuit 22. That is, the control circuit 27 performs feedback control so that the effective value of current matches the current command value.

Also, the control circuit 27 calculates the absolute value of the current value signal Id during the polarity switching period, transmits or receives the permission signal Pm, described later, to or from the control line 33, and generates the polarity switching signal Pdr for controlling the switching elements TR5 to TR8 of the polarity switching circuit 25 and outputs it to the polarity switching circuit 25.

The control circuit 27 performs forward/reversed polarity switching by following the steps described below at the timing when the synchronization signal is inputted from the control unit 1. When switching from the reversed polarity (EP) to the forward polarity (EN), in response to the synchronization signal inputted from the control unit 1, the control circuit 27 stops the operation of the inverter circuit 22 and switches the switching elements TR7 and TR6 of the polarity switching circuit 25, which have been in the off state, to the on state. As a result, the welding current Iw flowing in the external inductance Lx is divided and flows along the following two paths (1): the external inductance Lx → the electrode 7 → the arc 8 → the workpiece W → the output terminal 29 → the body diode of the switching element TR7 → the switching element TR5; and (2) :the external inductance Lx → the electrode 7 → the arc 8 → the workpiece W → the output terminal 29 → the switching element TR8 → the body diode of the switching element TR6. The energy stored in the external inductance Lx is consumed by the arc 8, and the welding current Iw and the output current Io gradually decrease. During this period, all switching elements TR5 to TR8 are on, and the current flowing in the DC reactor DCL is short-circuited by the switching elements TR5, TR6 and the rectifier DR2, and the switching elements TR7, TR8 and the rectifier DR2, and is not supplied to the arc 8 through the output terminals 28 and 29.

When the absolute value of the current value signal Id falls to or below a predetermined value (100 A), the control circuit 27 transmits the permission signal Pm, which is a high-level pulse signal, to the control line 33, turns off the switching elements TR5 and TR8, and starts the inverter circuit 22, which has been stopped. As a result, the current flowing in the DC reactor DCL flows through the path of: the switching element TR7 → the current detector CT → the output terminal 29 → the workpiece W → the arc 8 → the electrode 7 → the output terminal 28 → the switching element TR6 → the rectifier diode DR2. Thus, the polarity switches to the forward polarity (EN). Incidentally, the predetermined value is not limited to 100 A and may be any current value that enables suppressing the induced voltage of the external inductance Lx to an acceptable value. In the case where the absolute value of the current value signal Id has not fallen to or below the predetermined value (100 A) as well, the control circuit 27 turns off the switching elements TR5 and TR8 and starts the inverter circuit 22, which has been stopped, to perform switching to the forward polarity (EN) when it receives the permission signal Pm from the control line 33.

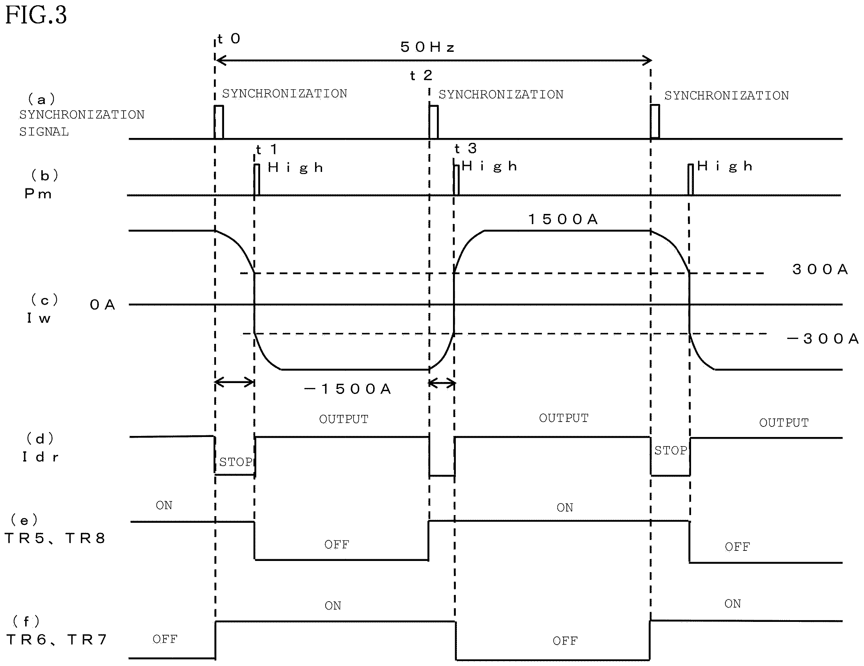

Fig. 3 is a view showing the outputted welding current Iw in the welding system A1 according to Embodiment 1 of the present disclosure. The following describes the operations of the welding system A1 with reference to the figure. In the figure, (a) shows the synchronization signal, (b) shows the permission signal Pm, (c) shows the welding current Iw, (d) shows the output control drive signals Idr, (e) shows the on/off state of the switching elements TR5 and TR8 of the polarity switching circuit 25, and (f) shows the on/off state of the switching elements TR6 and TR7 of the polarity switching circuit 25.

The control unit 1 transmits a current setting command for a square-wave welding current of 500 A to the welding power supplies 2a, 2b and 2c through the signal line 31. Also, the control unit 1 transmits a synchronization signal with a frequency of 50 Hz through the signal line 32 as shown in (a) in Fig. 3. The welding power supplies 2a, 2b and 2c are the same welding power supplies as that shown in the block diagram of Fig. 2, and the outputs of the welding power supplies 2a, 2b and 2c are connected in parallel. Therefore, the welding current Iw is a square-wave alternating current of ±1500 A with a frequency of 50 Hz, as shown in (c) in Fig. 3.

Time t0: At time t0, the synchronization signal is inputted to the welding power supplies 2a, 2b and 2c through the signal line 32, whereby switching from the reversed polarity (EP) to the forward polarity (EN) is instructed. Since the signal line 32 is a high-speed communication line with almost no delay in the transmission time, the control circuits 27 of the welding power supplies 2a, 2b and 2c start the polarity switching operation simultaneously by following the steps below:
(1) Stop the output of the output control drive signal Idr to stop the inverter circuit 22 as shown in (d) in Fig. 3.
(2) Turn on the switching elements TR6 and TR7 of the polarity switching circuit 25 as shown in (f) in Fig. 3.

The above states (1) and (2) are maintained until the absolute value of the current value signal Id falls to or below the predetermined value (100 A), to prevent the switching elements of the polarity switching circuit 25 from breaking down due to the induced voltage caused by the external inductance Lx.

Time t1: At time t1, the output currents Ioa, Iob and Ioc of the welding power supplies 2a, 2b and 2c fall to or below the predetermined value (100 A). In response to this, the control circuits 27 of the welding power supplies 2a, 2b and 2c simultaneously perform polarity switching by following the steps below:
(1) Transmit a high-level pulse signal as the permission signal Pm as shown in (b) in Fig. 3.
(2) Turn off the switching elements TR5 and TR8 of the polarity switching circuit 25 as shown in (e) in Fig. 3.
(3) Start outputting the output control drive signal Idr to start the inverter circuit 22 as shown in (c) in Fig. 3.

As a result, the welding current Iw switches from the reversed polarity (EP) to the forward polarity (EN) at time t1 and gradually falls to -1500 A as shown in (b) in Fig. 3.

Time t2: At time t2, the synchronization signal is inputted to the welding power supplies 2a, 2b and 2c through the signal line 32, whereby switching from the forward polarity (EN) to the reversed polarity (EP) is instructed. The control circuits 27 of the welding power supplies 2a, 2b and 2c start the polarity switching operation simultaneously by following the steps below:
(1) Stop outputting the output control drive signal Idr to stop the inverter circuit 22 as shown in (d) in Fig. 3.
(2) Turn on the switching elements TR5 and TR8 of the polarity switching circuit 25 as shown in (e) in Fig. 3.

The above states (1) and (2) are maintained until the absolute value of the current value signal Id falls to or below the predetermined value (100 A), to prevent the switching elements of the polarity switching circuit 25 from breaking down due to the induced voltage caused by the external inductance Lx.

Time t3: At time t3, the output currents Ioa, Iob and Ioc of the welding power supplies 2a, 2b and 2c fall to or below the predetermined value (100 A). In response to this, the control circuits 27 of the welding power supplies 2a, 2b and 2c simultaneously perform polarity switching by following the steps below:
(1) Transmit a high-level pulse signal as the permission signal Pm as shown in (b) in Fig. 3.
(2) Turn off the switching elements TR6 and TR7 of the polarity switching circuit 25 as shown in (f) in Fig. 3.
(3) Start outputting the output control drive signal Idr to start the inverter circuit 22 as shown in (c) in Fig. 3.

As a result, the welding current Iw switches from the forward polarity (EN) to the reversed polarity (EP) at time t3 and gradually rises to the set value of 1500 A as shown in (b) in Fig. 3.

By the above operations, the welding current Iw becomes a square-wave alternating current of ±1500 A with a frequency of 50 Hz as shown in (b) in Fig. 3. However, because the external inductances Lx connected to the welding power supplies 2a, 2b and 2c vary from each other, the time points at which the absolute value of the current value signal Id falls to or below the predetermined value (100 A) differ among the welding power supplies 2a, 2b and 2c. Therefore, it is difficult to synchronize the polarity switching time points t1 or t3 among the welding power supplies 2a, 2b and 2c.

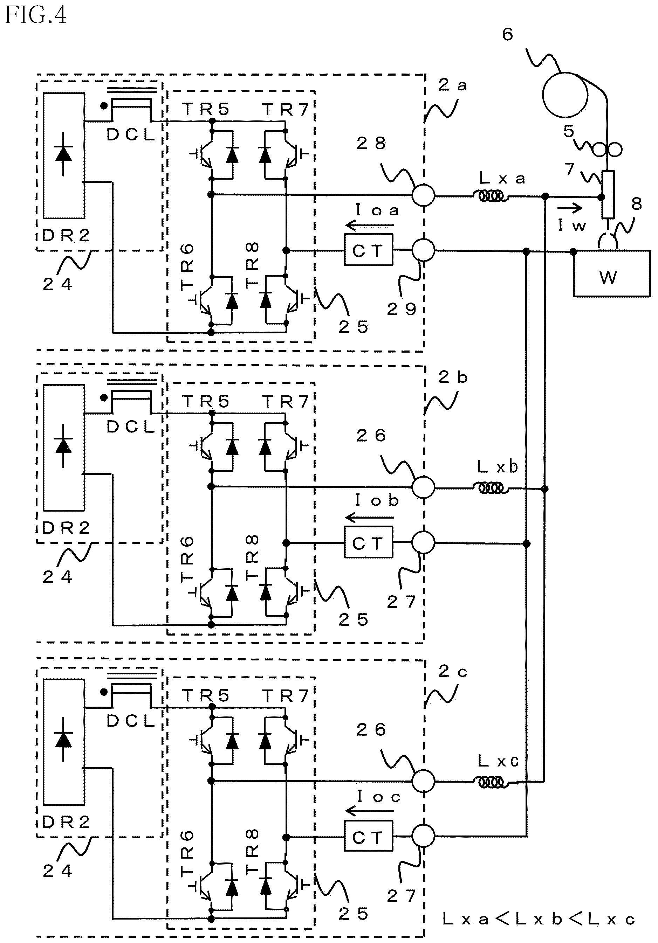

Fig. 4 is a block diagram of the welding system A1 according to Embodiment 1 of the present disclosure, where external inductances connected to the welding power supplies 2a, 2b and 2c are taken into consideration. Here, the magnitudes of the external inductances Lxa, Lxb and Lxc are assumed to satisfy the relationship Lxa < Lxb < Lxc. The block diagrams and operations of the welding power supplies 2a, 2b and 2c are the same as those shown in Fig. 2, and the descriptions are omitted.

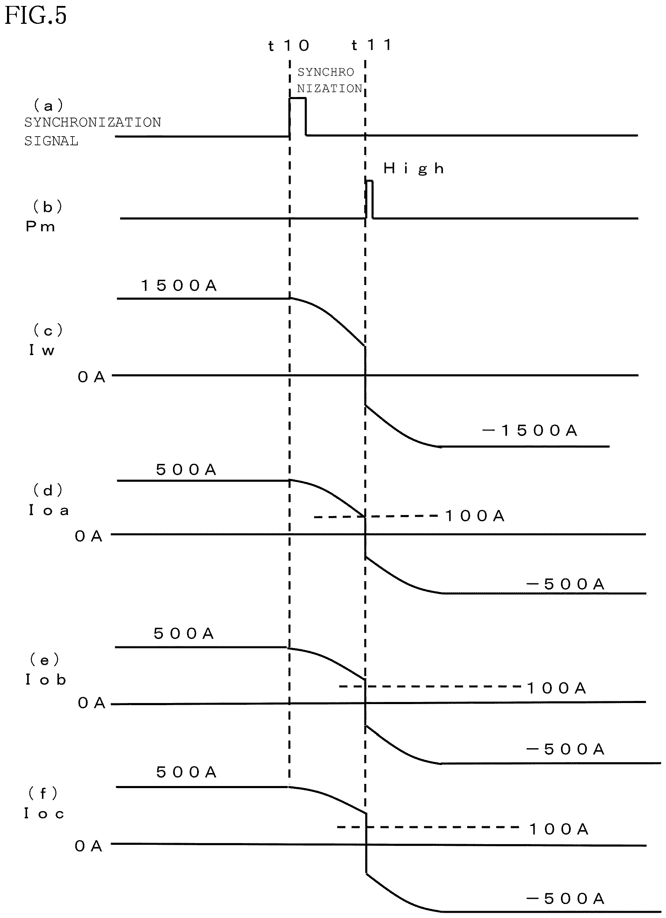

Fig. 5 is a timing chart of the polarity switching operation in the welding system A1 according to Embodiment 1 of the present disclosure shown in Fig. 4 in the case where the magnitudes of the external inductances Lxa, Lxb and Lxc connected to the welding power supplies 2a, 2b and 2c, respectively, are different (Lxa < Lxb < Lxc). In the figure, (a) shows the synchronization signal, (b) shows the permission signal Pm, (c) shows the welding current Iw, (d) shows the output current Ioa of the welding power supply 2a, (e) shows the output current Iob of the welding power supply 2b, and (f) shows the output current Ioc of the welding power supply 2c. With reference to the figure, the following explains how Embodiment 1 can synchronize the polarity switching timings of the welding power supplies 2a, 2b and 2c also in the case where their external inductances are different.

Time t10: At time t10, as shown in (a) in the figure, the synchronization signal is inputted to the welding power supplies 2a, 2b and 2c through the signal line 32, whereby switching from the reversed polarity (EP) to the forward polarity (EN) is instructed. The control circuits 27 of the welding power supplies 2a, 2b and 2c stop the inverter circuits 22 and turn on the switching elements TR5 to TR8 of the polarity switching circuits 25. As a result, the output currents Ioa, Iob and Ioc flowing in the welding power supplies 2a, 2b and 2c decrease as shown in (d) to (f) of the figure, but the rate of decrease differs because of the difference in magnitude (Lxa < Lxb < Lxc) of the external inductances Lxa, Lxb and Lxc. The rate of decrease of the output current IoA of the welding power supply 2a, to which the smallest external inductance is connected, is the largest, and the rate of decrease of the output current Ioc of the welding power supply 2c, to which the largest external inductance is connected, is the smallest.

Time t11: As shown in (d) in the figure, when the output current Ioa of the welding power supply 2a, which has the largest rate of decrease, falls to or below the predetermined value (100 A) at time t11, the control circuit 27 of the welding power supply 2a transmits a high-level pulse signal as the permission signal Pm to the signal line 33, turns off the switching elements TR5 and TR8 of the polarity switching circuit 25, and starts the inverter circuit 22 to switch the polarity to the forward polarity (EN). At time t11, the output currents Iob and Ioc of the welding power supplies 2b and 2c have not yet fallen to the predetermined value (100 A) as shown in (e) and (f) in the figure. However, the control circuits 27 of the welding power supplies 2b and 2c, which have received the permission signal Pm transmitted by the welding power supply 2a, turn off the switching elements TR5 and TR8 of the polarity switching circuits 25 and start the inverter circuits 22 to switch the polarity to the forward polarity (EN). In this way, the polarity switching timings of the welding power supplies 2a, 2b and 2c can be synchronized.

According to Embodiment 1, there is a risk that the switching elements of the polarity switching circuits 25 of the welding power supplies 2b and 2c break down during the polarity switching, because the output currents IoB and IoC of the welding power supplies 2b and 2c have not yet fallen to or below the predetermined value (100 A), although the output current IoA of the welding power supply 2a has fallen to or below the predetermined value (100 A). Embodiment 2 solves the issue as follows.

### [Embodiment 2]

In Embodiment 2, the polarity switching is performed when the output currents Io of all welding power supplies connected in parallel in the welding system A1 have fallen to or below the predetermined value (100 A). To this end, the control circuit 27 performs polarity switching upon confirming that all welding power supplies other than itself (i.e., the welding power supply in which the control circuit 27 in question is incorporated), which are connected in parallel in the welding system A1, have transmitted the permission signal Pm to the communication line 33. This confirmation may be performed based on the data transmitted from the control unit 1 that indicates a certain number and/or numbers of the welding power supplies connected in parallel in the welding system A1.

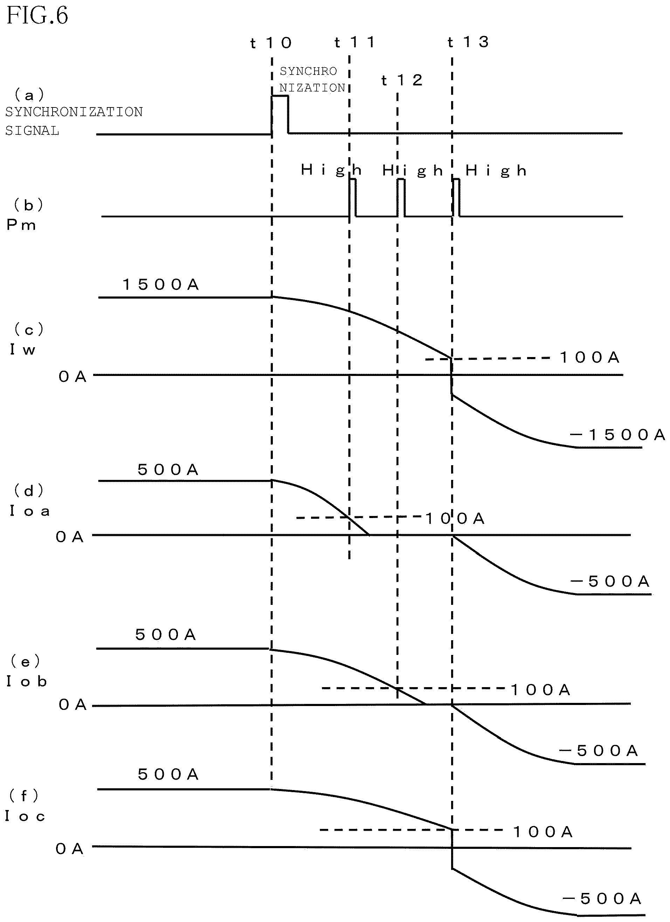

Fig. 6 is a timing chart for explaining the polarity switching operation in the welding system A1 according to Embodiment 2 of the present disclosure. The following describes the operations during the polarity switching with reference to the figure. In Embodiment 2, the configurations and block diagrams of the welding system A1 and the welding power supplies 2a, 2b and 2c are the same as those of Embodiment 1 of the present disclosure.

The control circuits 27 of the welding power supplies 2a, 2b and 2c set the number of welding power supplies, including itself, connected in parallel in the welding system A1 to 3 ("the parallel connection number" = 3), based on the data on the number of welding power supplies that is transmitted from the control unit 1 via the communication line 31.

Time t10: At time t10, as shown in (a) in the figure, the synchronization signal is inputted to the welding power supplies 2a, 2b and 2c through the signal line 32, whereby switching from the reversed polarity (EP) to the forward polarity (EN) is instructed. The control circuits 27 of the welding power supplies 2a, 2b and 2c reset the number of transmitted/received permission signals to zero, stop the inverter circuits 22, and turn on the switching elements TR5 to TR8 of the polarity switching circuits 25.

Time t11: As shown in (d) in the figure, at time t11, the output current Ioa of the welding power supply 2a, which has the largest rate of decrease, falls to or below the predetermined value (100 A), i.e., the absolute value of the current value signal Id of the welding power supply 2a falls to or below the predetermined value (100 A). At this time, as shown in (b) in the figure, the control circuit 27 of the welding power supply 2a transmits a high-level pulse signal as the permission signal Pm to the signal line 33 and sets the number of transmitted/received permission signals to 1. At this point, the number of transmitted/received permission signals has not yet reached 3 ("the parallel connection number"). Therefore, the control circuit 27 of the welding power supply 2a stops the inverter circuit 22 without performing the polarity switching and maintains the on state of the switching elements TR5 to TR8 of the polarity switch circuit 25. The control circuits 27 of the welding power supplies 2b and 2c receive the permission signal Pm from the welding power supply 2a and count up the number of transmitted/received permission signals to 1.

Time t12: As shown in (e) in the figure, at time t12, the output current Iob of the welding power supply 2b falls to or below the predetermined value (100 A). As shown in (b) in the figure, the control circuit 27 of the welding power supply 2b transmits a high-level pulse signal as the permission signal Pm to the signal line 33 and counts up the number of transmitted/received permission signals to 2. At this point, the number of transmitted/received permission signals has not yet reached 3 ("the parallel connection number"). Therefore, the control circuit 27 of the welding power supply 2b stops the inverter circuit 22 and maintains the on state of the switching elements TR5 to TR8 of the polarity switch circuit 25. The control circuits 27 of the welding power supplies 2a and 2c receive the permission signal Pm from the welding power supply 2b and count up the number of transmitted/received permission signals to 2.

Time t13: As shown in (f) in the figure, at time t13, the output current Ioc of the welding power supply 2c, which has the smallest rate of decrease, falls to or below the predetermined value (100 A). As shown in (b) in the figure, the control circuit 27 of the welding power supply 2c transmits a high-level pulse signal as the permission signal Pm to the signal line 33 and counts up the number of transmitted/received permission signals to 3. Since the number of transmitted/received permission signals has reached 3 ("the parallel connection number"), the control circuit 27 of the welding power supply 2c turns off the switching elements TR5 to TR8 of the polarity switching circuit 25 and starts the inverter circuit 22 to switch the polarity to the forward polarity (EN). The control circuits 27 of the welding power supplies 2a and 2b receive the permission signal Pm from the welding power supply 2c and count up the number of transmitted/received permission signals to 3. Since the number of transmitted/received permission signals has reached 3 ("the parallel connection number"), the control circuits 27 of the welding power supplies 2a and 2b turn off the switching elements TR5 to TR8 of the polarity switching circuits 25 and start the inverter circuits 22. In this way, the welding power supplies 2a and 2b also switch the polarity to the forward polarity (EN) at the same time as the welding power supply 2c does.

According to Embodiment 2, the polarity switching is performed when all output currents Ioa, Iob and Ioc of the welding power supplies 2a, 2b and 2c fell to or below the predetermined value (100 A). Therefore, it is not necessary to worry about the breakdown of the switching elements of the polarity switching circuits 25. As shown in (d) and (e) in the figure, the output currents Ioa and Iob of the welding power supplies 2a and 2b may become 0 A during the polarity switching period (t10 to t13). However, even at the time t13 when polarity switching is performed, the welding current Iw of about 100 A flows in the arc 8. Further, at time t13, the current flowing in the DC reactors DCL of the welding power supplies 2a, 2b and 2c is supplied to the arc 8. Therefore, the welding current Iw does not falls to or below 100 A, and arc generation is sustained.

In Embodiment 2, the welding system A1 has been described which includes three 500A-class welding power supplies connected in parallel and is capable of outputting an amplitude of ±1500 A. Generally, the welding system A1 is configured as a welding system capable of outputting an AC welding current with a frequency of 10 to 100 Hz and an amplitude of about ±4500 A, and constituted of nine 500A-class welding power supplies connected in parallel or three 1500A-class welding power supplies connected in parallel. To output an AC welding current with a frequency of up to 100 Hz, the polarity switching period (t10 to t13), which is the period from the output of the synchronization signal to the polarity switching, may need to be within 10% of the half cycle period, i.e., (1/100Hz) x 1/2 x 0.1 = 0.5 ms. Therefore, when nine 500A-class welding power supplies or three 1500A-class welding power supplies are connected in parallel to increase the capacity of the welding current, the output currents of all welding power supplies may not fall to or below the predetermined value within 0.5 ms, and the desired frequency may not be obtained. For this reason, the control circuit 27 may be configured to switch the polarity when a predetermined period of time has elapsed from the synchronization signal even if the number of transmitted/received permission signals has not reached the number of devices connected in parallel. The predetermined period of time may be set as a default in the control circuit 27 in advance or may be a value transmitted from the control unit 1 through the communication line 31.

If there is a welding power supply of which output current had not fallen to or below the predetermined value and of which polarity switching was performed after the lapse of a predetermined period of time from the output of the synchronization signal, the operator may be notified of the existence of the welding power supply by an alarm. This urges the operator to check, for example, the wiring between the output terminals 28 and the electrode 7 and the wiring between the output terminal 29 and the workpiece W, thereby facilitating troubleshooting. The alarm may be implemented, without limitation, by a warning lamp or the like.

### REFERENCE NUMERALS

| | | | |
|---|---|---|---|
| 1: | Control unit | 2, 2a to 2c: | Welding power supply |
| 4: | Carriage | 5: | Wire feeder |
| 6: | Welding wire | 7: | Electrode |
| 8: | Arc | 9: | Flux |
| 21: | Rectifying/smoothing circuit | 22: | Inverter circuit |
| 23: | Transformer | 23a: | Primary winding |
| 23b: | Secondary winding | 24: | Rectifying circuit |
| 25: | Polarity switching circuit | 27: | Control circuit |
| 28, 29: | Output terminal | 31 to 33: | Communication line |
| A1: | Welding system | C1: | Smoothing capacitor |
| CT: | Current detector | DCL: | DC reactor |
| DR1, DR2: | Rectifier | P: | Comercial power supply |
| Pdr: | Polarity switching signal | Pm: | Permission signal |
| Lx, Lxa to Lxc: | External inductance | Id: | Current value signal |
| TR1 to TR8: | Switching element | Iw: | Welding current |
| Idr: | Output control drive signal | | |
| Io, Ioa to Ioc: | Output current | | |
| W: | Workpiece | | |

## Claims

1. A welding system comprising a plurality of welding power supplies connected in parallel, each of the welding power supplies comprising:
an inverter circuit that convers DC power into high-frequency power;
a transformer that applies the high-frequency power generated by the inverter circuit to a primary winding to convert the high-frequency power to a predetermined voltage;
a rectifying circuit that converts a high-frequency power generated at a secondary winding of the transformer into a DC power;
a polarity switching circuit that converts output of the rectifying circuit into a bipolar welding current by switching elements connected in series;
a current detector that detects the welding current;
a control circuit that drives the inverter circuit and the polarity switching circuit;
a communication line that receives a synchronization signal indicating polarity switching timing from a control unit by high-speed communication; and
a second communication line that transmits a permission signal, the permission signal being generated by the control circuit when an absolute value of output of the current detector falls to or below a predetermined value during a polarity switching period, the polarity switching period being a period in which the control circuit stops the inverter circuit and keeps both of the switching elements of the polarity switching circuit that are connected in series in an on state,
wherein the control circuit turns off one of the switching elements and starts the inverter circuit to perform polarity switching when the absolute value of the output of the current detector falls to or below the predetermined value or when the permission signal is received through the second communication line.

2. The welding system according to claim 1, wherein the control circuit turns off one of the switching elements and starts the inverter circuit to perform polarity switching when the absolute value of the output of the current detector falls to or below the predetermined value and the permission signal is received from all of the welding power supplies connected in parallel other than the welding power supply of the control unit through the second communication line.

3. The welding system according to claim 2, wherein the control circuit turns off one of the switching elements and starts the inverter circuit to perform polarity switching when a predetermined period of time has elapsed from the synchronization signal.

4. The welding system according to claim 3, wherein the control circuit issues a warning using an alarm in a case where the control circuit turns off one of the switching elements and starts the inverter circuit to perform polarity switching when a predetermined period of time has elapsed from the synchronization signal.
